# FASCICULE DE BREVET EUROPEEN

(11) **EP 0 740 169 B1**
(45) Date de publication et mention de la délivrance du brevet: **25.09.2002**
(21) Numéro de dépôt: 96400875.9
(22) Date de dépôt: 24.04.1996
(51) Int. Cl.: G02B 3/00, G02B 27/09

(54) **Dispositif d'éclairement**
Beleuchtungsvorrichtung
Illumination device

(30) Priorité: 28.04.1995 FR 9505112
(43) Date de publication de la demande: 30.10.1996
(73) Titulaire: THOMSON multimedia, 92648 Boulogne Cédex (FR)
(72) Inventeur: Drazic, Valter, 92050 Paris La Defense Cedex (FR); Sarayeddine, Khaled, 92050 Paris La Defense Cedex (FR); Marcellin-Dibon, Eric, 92050 Paris La Defense Cedex (FR)
(74) Mandataire: Ruellan-Lemonnier, Brigitte

(56) Documents cités:
- EP-A- 0 239 007
- EP-A- 0 395 156
- EP-A- 0 512 893
- EP-A- 0 563 874
- WO-A-95/00865
- US-A- 4 769 750
- E.A.WATSON: "ANALYSIS OF BEAM STEERING WITH DECENTERED MICROLENS ARRAYS" OPTICAL ENGINEERING, vol. 32, no. 11, novembre 1993, BELLINGHAM US, pages 2665-2670, XP002006881

## Description

L'invention concerne un dispositif d'éclairement et plus particulièrement un dispositif d'éclairement pour appareil de projection ou de visualisation et notamment un appareil d'éclairement d'un écran électrooptique tel qu'un écran à cristal liquide.

Un appareil de projection comporte essentiellement un système d'illumination pour éclairer par transparence au moins une image (diapositive) tel qu'un écran à cristal liquide. Une image est générée et projetée sur un écran par une optique de projection.

Des dispositifs particulièrement relevants sont décrits dans EP 0 512 893 et EP 0 239 007.

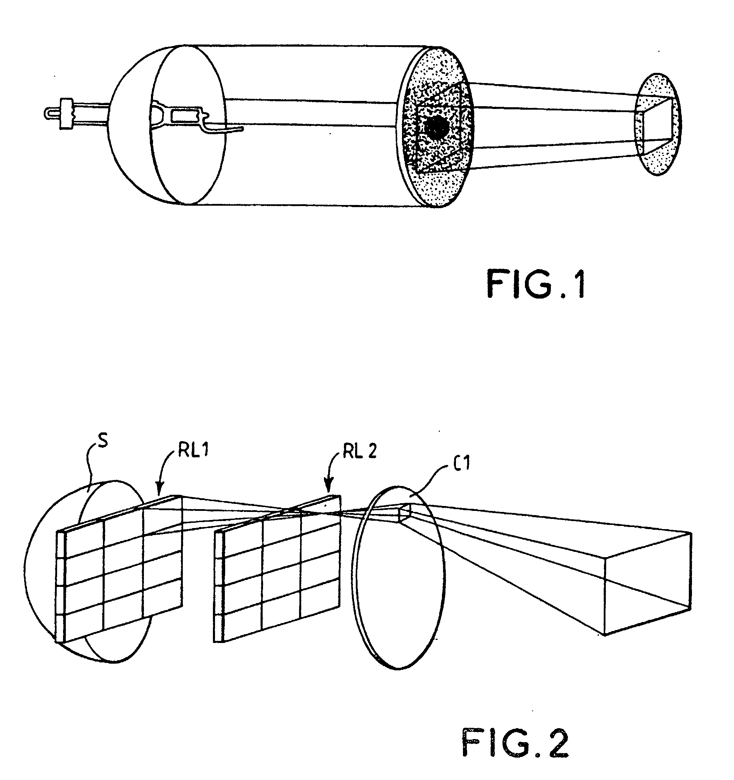

Un système d'illumination efficace comprend typiquement une lampe halogène (ou à Xénon ou à filament, ...) et un réflecteur parabolique pour réfléchir la lumière (figure 1). L'état de l'art de ce type de système présente des inconvénients. En effet, la forme du faisceau est différente de celle de l'écran, or nous avons besoin d'une bonne illumination uniforme ; il se produit donc une perte considérable de lumière. Les pertes sont au moins de 46 % pour l'éclairement d'un écran de format rectangulaire 16/9 (de plus, les écrans à cristal liquide doivent être munis d'un polariseur et d'un analyseur de polarisations puisque la source n'est pas polarisée. Il y a donc une perte supplémentaire pouvant atteindre 60 à 70 %).

Dans le document EP 0 395 156 de nombreuses solutions ont été décrites pour résoudre ce problème. Ces solutions sont basées sur les propriétés de l'intégrateur optique. La figure 2 est une illustration du principe de l'intégration optique : une source de lumière S est imagée sur un réseau secondaire de lentilles RL2 au moyen d'un premier réseau de lentilles RL1. Chaque lentille individuelle du premier réseau est ensuite imagée sur la surface de l'écran LC à illuminer par le deuxième réseau de lentilles. La forme et la taille de chaque lentille individuelle de RL1 sont telles que leur image sur l'écran ont la forme et la taille de l'écran. En raison de la géométrie des lentilles individuelles, la superposition des images des lentilles de RL1 pourra avoir la même forme que l'écran à illuminer. On collecte ainsi le maximum de lumière fournie par le réflecteur ce qui permet d'augmenter le flux lumineux et donc l'efficacité.

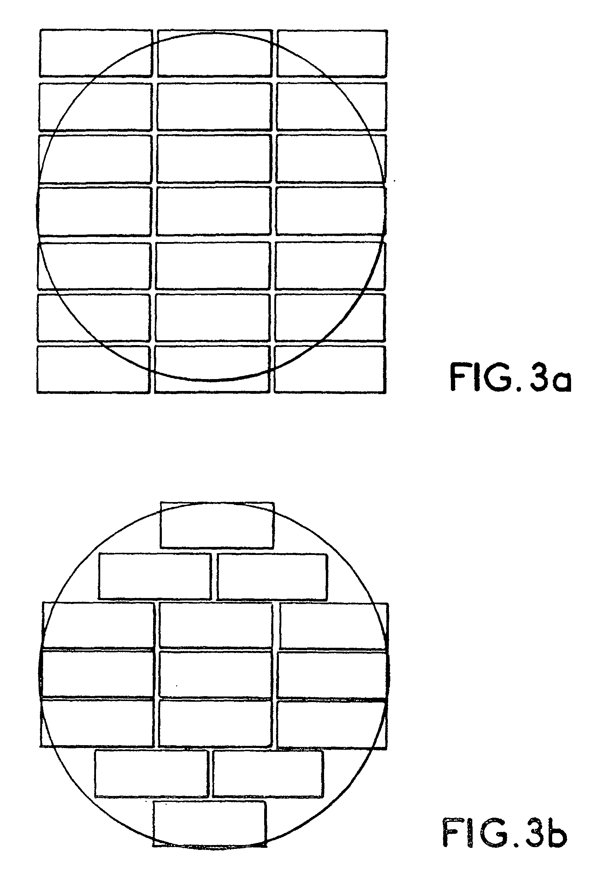

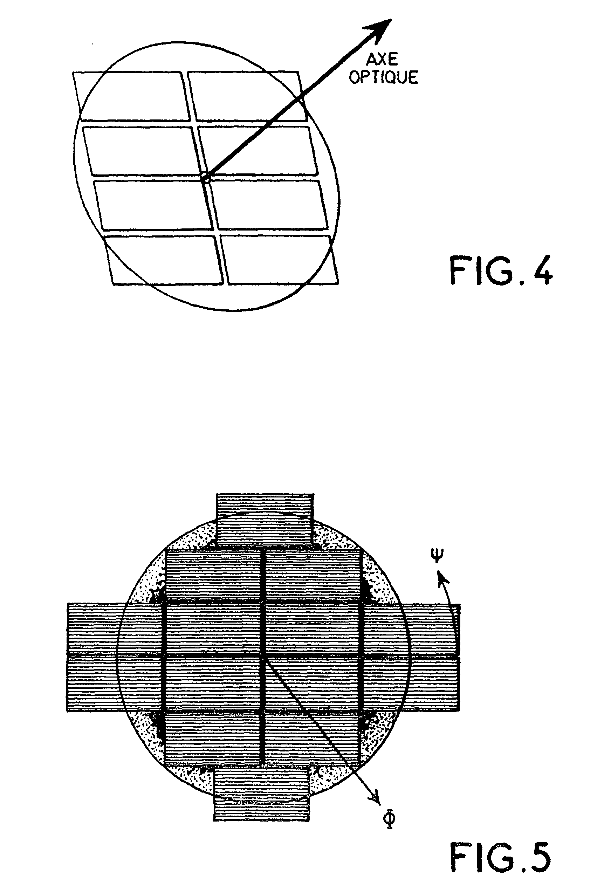

Le document EP 0 395 156 décrit des systèmes d'imagerie par intégration pour systèmes d'éclairement. Ils comportent une source lumineuse d'orientation quelconque, un réflecteur concave et des lentilles de tout type et forme (lentilles classiques, de Fresnel, ...). Ces lentilles sont toujours arrangées de manière régulière (figure 3a) en lignes et colonnes ou de façon imbriquée de telle manière à remplir au maximum le champ d'ouverture du réflecteur (figure 3b). De plus, le réseau de lentilles est toujours disposé pour que les frontières communes à quatre lentilles coïncident avec l'axe optique du faisceau (figures 4). On constate :
- qu'un intégrateur augmente l'étendue angulaire d'éclairement de l'image (de l'écran à cristal liquide). Or il est connu que le contraste d'une image d'un écran à cristal liquide diminue lorsque l'angle d'éclairement augmente.

Considérant un système d'éclairement dans lequel une lampe à arc est située dans un réflecteur sphérique, parabolique ou elliptique, tel que cela est représenté en figure 1, on voit que la lampe doit être maintenue à l'intérieur du réflecteur et il y a donc une ouverture dans la partie bombée du réflecteur. Cela signifie que l'illumination en sortie du réflecteur présente une zone centrale sans lumière comme cela est représenté sur la figure 6 qui illustre l'éclairement à la sortie du miroir parabolique. Selon la figure 7a, l'interruption d'illumination est située quasiment au milieu d'un intégrateur.

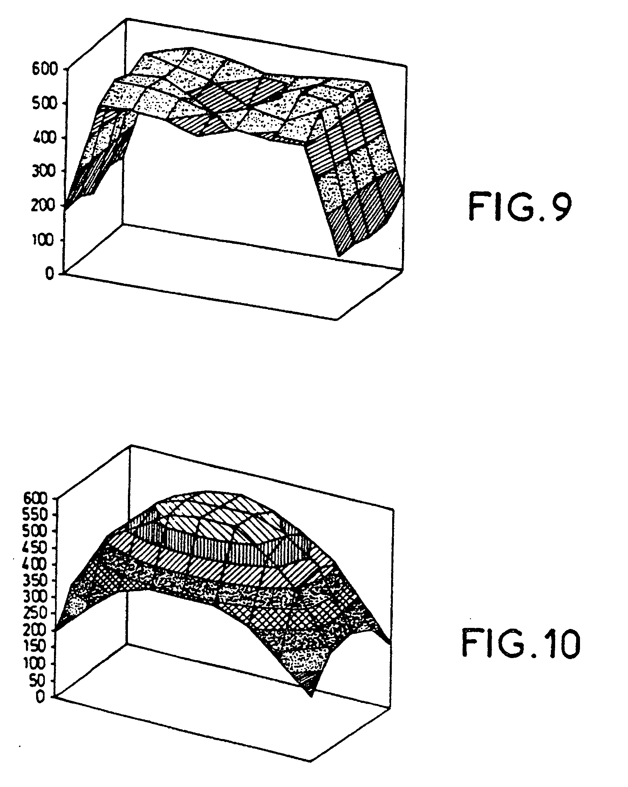

Comme cela apparaît sur la figure 9, un affaiblissement de l'illumination a lieu au centre de l'image.

L'invention a pour objet de résoudre cet inconvénient.

Par ailleurs, les projecteurs à cristaux liquides ont actuellement un faible rendement lumineux. Ce faible rendement s'explique par les atténuations suivantes que subit le flux lumineux
a) la source d'illumination étant non polarisée : perte de plus de 50 % du flux ;
b) le format des modulateurs (ou valves) LCD est 16:9 : pertes 46 % ;
c) l'efficacité de découpage du spectre blanc de la lampe : 50 à 50 % ;
d) d'autres éléments peuvent encore rentrer en jeu, mais l'élément le plus fondamental est l'étendue géométrique de la source d'illumination. Plus le flux est collimaté, plus l'efficacité d'illumination est meilleure.

Plusieurs solutions existent pour pallier ces handicaps. Ces solutions s'accompagnent d'une augmentation de l'étendue de la source et dans certains cas d'une augmentation du nombre des composants et donc de la complexité du système d'illumination.

Une première solution est de séparer les deux composantes de polarisations orthogonales s et p par exemple à l'aide d'un séparateur spatial de polarisation PBS (Polarizing Beam Splitters) et de tourner le plan de la polarisations par exemple à l'aide d'une lame demi-onde ("Efficient optical configuration for polarized white light illumination of 16/9 LCDs in projection display" C. Nicolas, B. Loiseaux, J.P. Huignard, A. Dupont, SID Japan Oct. 92). Cette méthode est limitée par la faible acceptance angulaire du PBS.

Une deuxième solution fait appel aux nouveaux composants à cristaux liquides de type cholestérique ("Novel polarized liquid-crystal color projection and new TN-LCD operating modes" M. Schatt, J. Fünfschelling, SID 90 DIGEST, Las Vegas, Nevada pp 324-326). Cette solution s'inscrit dans le contexte d'utiliser le composant cholestérique pour les fonctions de séparation, modulation, etc ...

D'autres méthodes peuvent utiliser une solution où la polarisation non voulue est normalement réfléchie pour être récupérée, au lieu d'être absorbée (voir demande de brevet européen n° 0 422 611).

De plus, les lampes utilisées en projection LCD sont typiquement de type lampe à arc de type halogénure métallique ou Xénon. Le système d'illumination se résume dans la plupart des cas au schéma classique d'une lampe positionnée au foyer d'un réflecteur parabolique ou bien au foyer d'un réflecteur elliptique muni d'un condenseur. L'homogénéité d'illumination de la valve cristal liquide est ajustée par une défocalisation de la lampe dans le réflecteur. Deux inconvénients majeurs résultent de l'utilisation de ce système. Le premier est une illumination circulaire et pas rectangulaire (discutée plus haut), et le deuxième est une inadaptation entre le cône d'illumination délivré par ce système avec l'angle d'acceptance de la valve ou plus généralement avec le conoscope de contraste d'une valve cristal liquide TN.

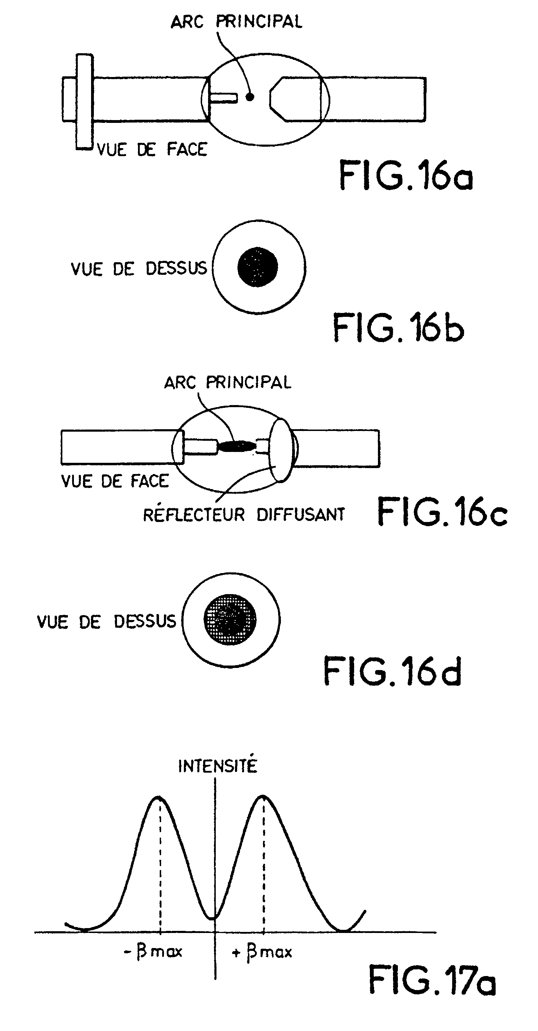

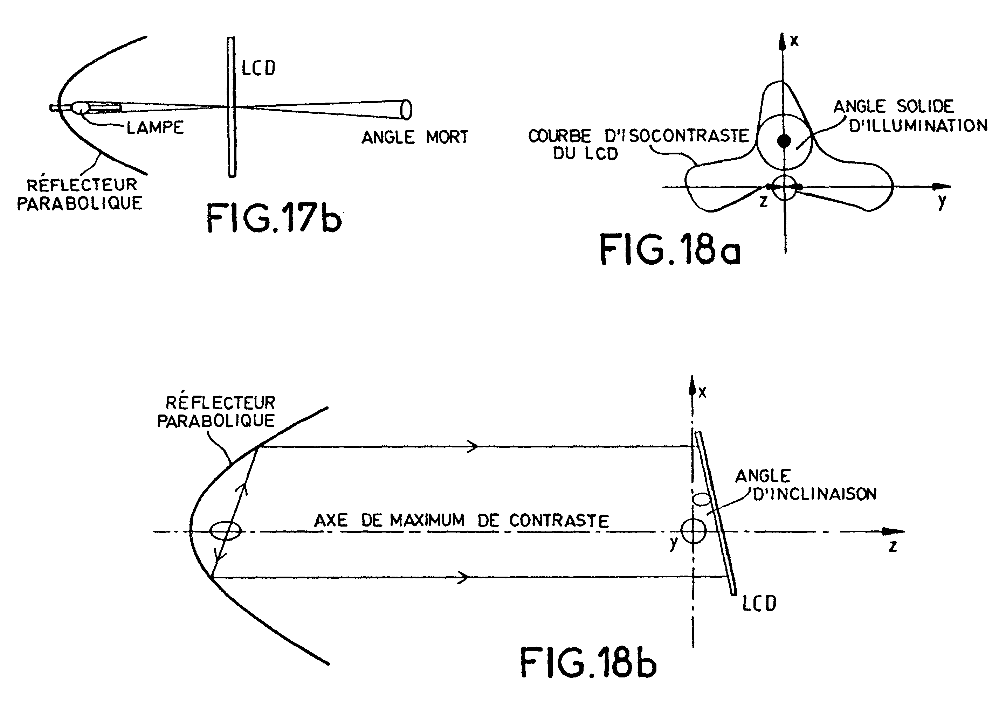

En effet, les figures 16a à 16d montrent deux types de lampe utilisés en projection LCD, figures 16a et 16b, lampe à arc à halogénure métallique et figures 16c et 16d lampe à arc de type Xe. Comme on le constate, ces deux lampes une fois placées dans un réflecteur parabolique (ou elliptique) obturent de part leur encombrement les rayons les plus proches de l'axe optique. Cet encombrement provient de la forme de lampe et de son positionnement dans le réflecteur. Si l'on regarde de plus près la répartition de l'intensité lumineuse à l'intérieur du cône d'illumination (angle solide soutenu par la section d'illumination), on remarque que cette répartition est (sur l'axe optique) en forme de cloche : déficitaire au centre, maximale à un angle ± β max de l'ordre de 2 à 4 degrés (voir figures 17a et 17b).

La cellule cristal liquide est illuminée dans la plupart des cas avec un angle d'incidence moyen différent de zéro : de l'ordre de 6 degrés pour être à l'angle du maximum de contraste de la cellule cristal liquide (voir figures 18a et 18b). Si donc après inclinaison de la cellule cristal liquide β max correspond à l'angle de maximum de contraste, -βmax sera complètement en-dehors du cône d'acceptance du LCD.

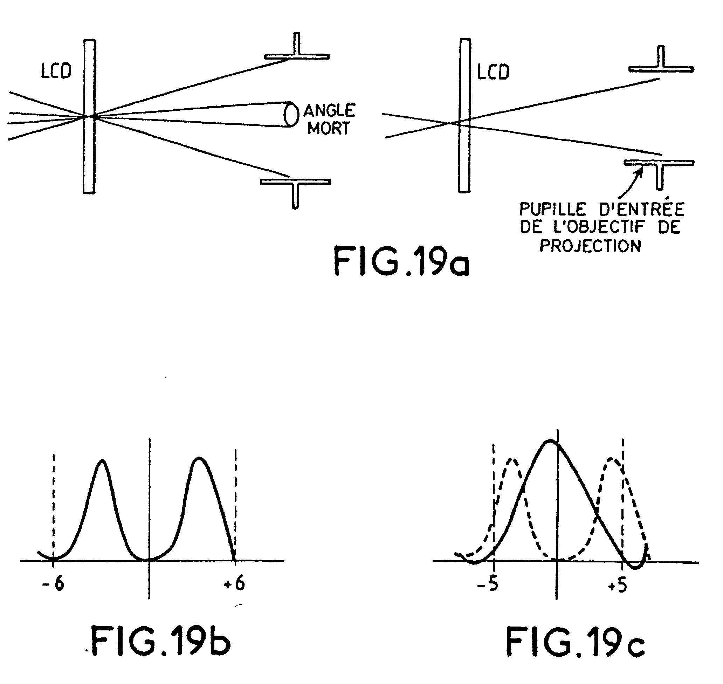

De plus, l'objectif de projection (figures 19a à 19c) associé à un système optique trois valves ou monovalves, dépend essentiellement de l'angle solide soutenu par la valve cristal liquide. Si cette ouverture est grande, l'objectif de projection sera plus coûteux. En regardant la répartition d'intensité à l'intérieur d'un cône d'illumination classique, on se rend compte qu'une zone centrale de ± 1 degrés est non utilisée car ne porte pas d'énergie (voir figure 19a). Si la répartition de cette énergie change d'une forme en double cloche (figure 19b), avec β = ± 6 degrés à une partition en cloche centrée (figure 19c) alors on peut ignorer les ± 1 degrés supplémentaires sur les bords de cette cloche et concevoir ainsi une ouverture plus faible pour l'objectif de projection.

En effet :
f/# = 1/[2.sin(6)] soit 4.78 si la répartition change et que l'on peut passer à ± 5 degrés par exemple, alors f/# devient 5.73. Cette opération s'effectuera alors sans grandes pertes de luminance et représentera aussi un gain notable pour la conception et le prix de l'objectif de projection.

L'invention concerne donc un dispositif d'éclairement d'une première surface d'écran à cristal liquide tel que défini dans la revendication 1.

L'invention est donc applicable à l'éclairement d'un écran à cristal liquide.

Les différents objets et caractéristiques de l'invention apparaîtront plus clairement dans la description qui va suivre et dans les figures annexées qui représentent :
- les figures 1 à 5, des systèmes d'éclairement connus dans la technique et déjà décrits précédemment ;

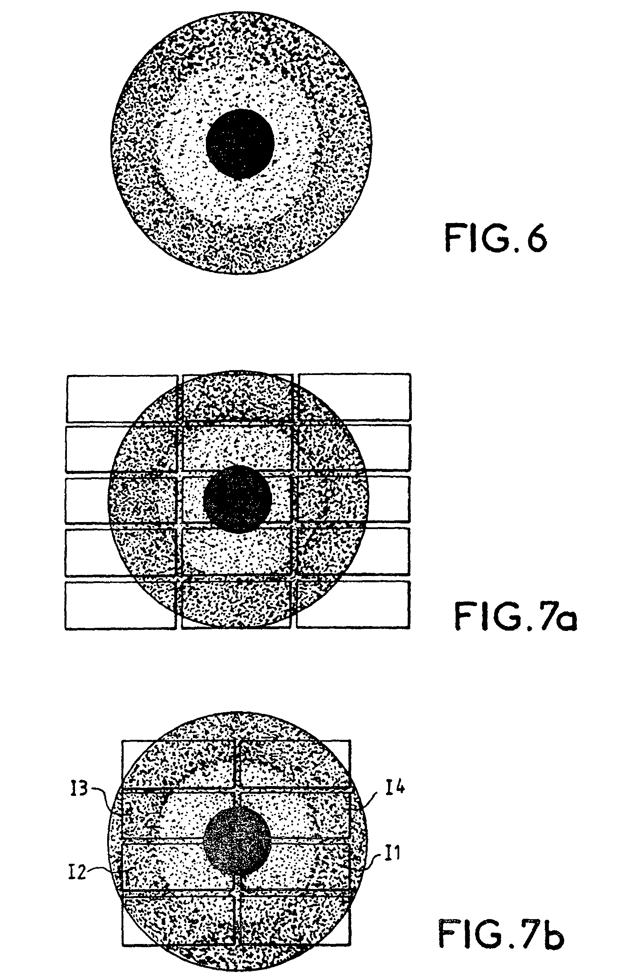

- les figures 6 à 11b, un système selon l'invention permettant de faire varier l'uniformité d'éclairement d'un écran ;

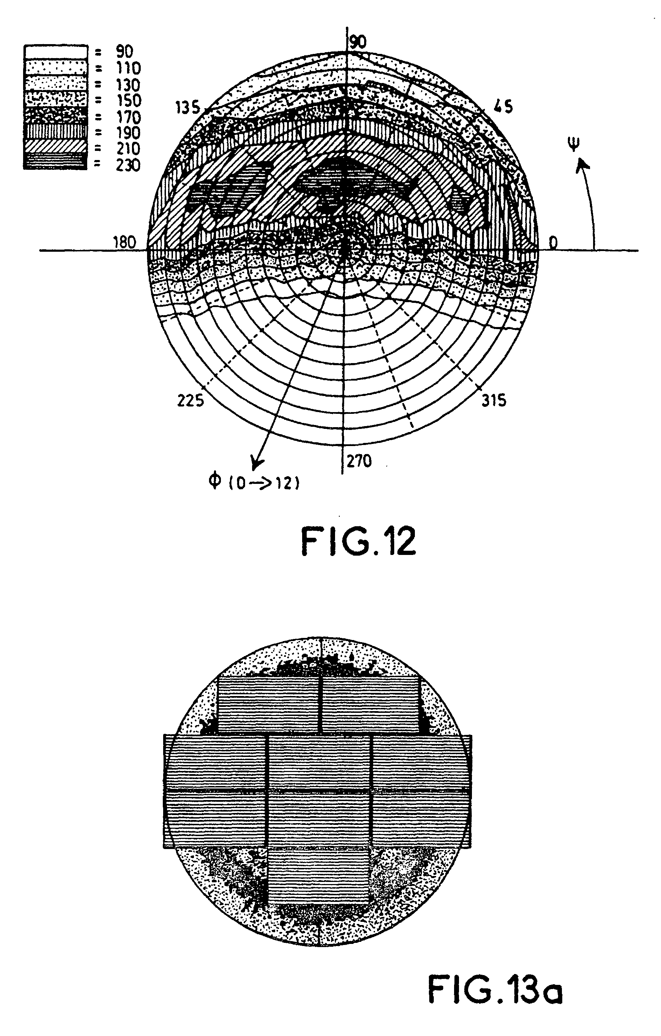

- la figure 12, un diagramme de contraste d'éclairement d'un écran à cristal liquide selon l'angle d'incidence du faisceau d'éclairement ;

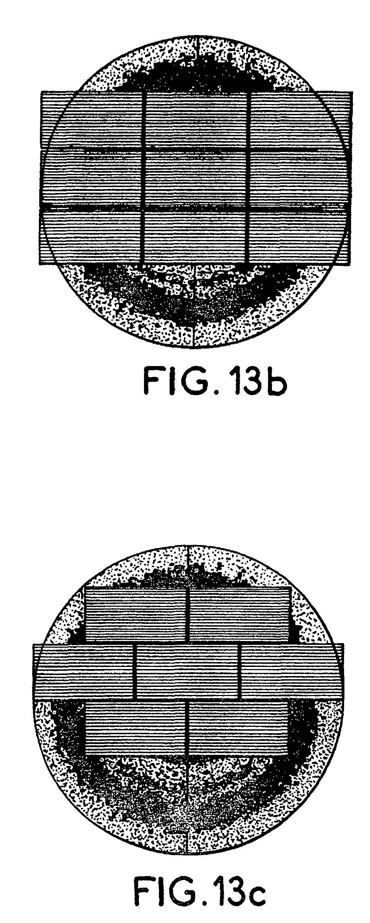

- les figures 13a à 13e, des solutions permettant d'améliorer le contraste d'éclairement d'un écran ;

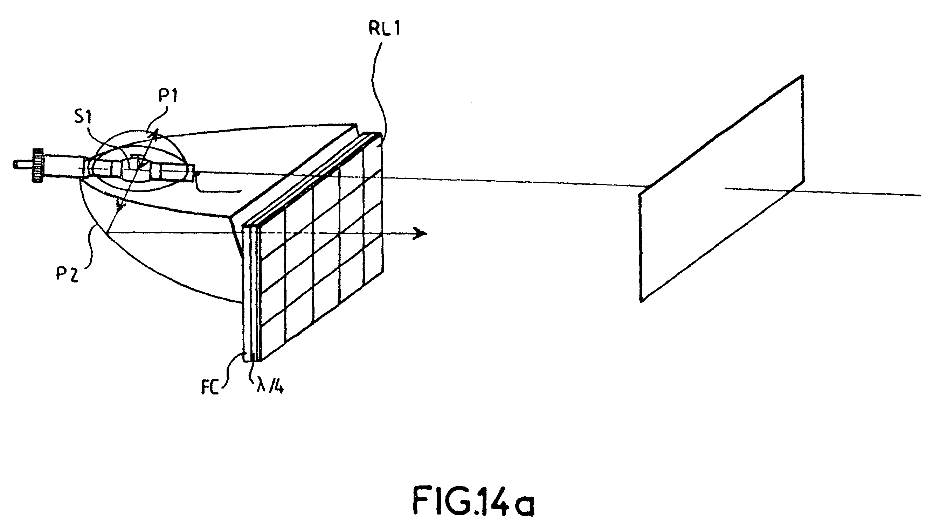

- les figures 14a à 15b, des variantes de réalisation permettant d'améliorer le contraste d'éclairement d'un écran à cristal liquide ;
- les figures 16a à 19c, des dispositions connues dans la technique et décrites précédemment.

Selon l'invention, on prévoit donc d'atténuer les inhomogénéités de la source d'éclairement. Par exemple, comme mentionné précédemment, la fixation de la lampe dans le réflecteur de la source nécessite de prévoir un trou dans le réflecteur. Celui-ci possède donc une zone non réfléchissante.

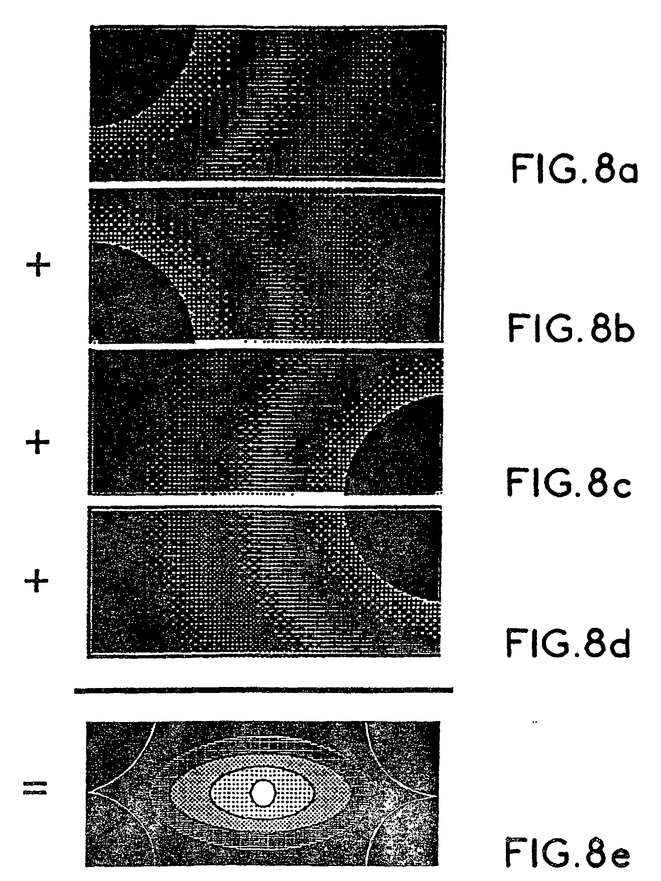

Selon la figure 7b, on prévoit d'arranger les lentilles du réseau RL1 de façon que la partie du faisceau transmis par la source correspondant au trou du réflecteur soit centré au point commun de quatre lentilles. Ainsi, l'intégrateur est situé de façon que l'interruption d'illumination affecte plusieurs lentilles et notamment les quatre lentilles centrales (I1 à 14). Les cartes d'illumination des différentes lentilles I1 à I4 sont représentées respectivement par les figures 8a à 8d. La superposition de ces illuminations est représentée par la figure 8e. Ainsi un pic d'illumination apparaît au centre et l'affaiblissement de l'illumination dû au trou du réflecteur est réparti à la périphérie.

Selon une variante, on prévoit de ne pas prévoir de lentille pour la partie du faisceau correspondant à un affaiblissement d'éclairement.

Notamment, comme cela est représenté en figure 11a, le réseau de lentilles RL1 ne comporte pas de lentilles pour les parties faibles du faisceau d'illumination. Par exemple, si le réflecteur de la source S comporte une ouverture dans sa zone centrale, le réseau RL1 ne comporte pas de lentille pour la partie du faisceau qui aurait dû être réfléchie par cette zone centrale. Par suite, de préférence, on ne prévoit pas non plus de lentille dans le réseau RL2 correspondant à cette zone.

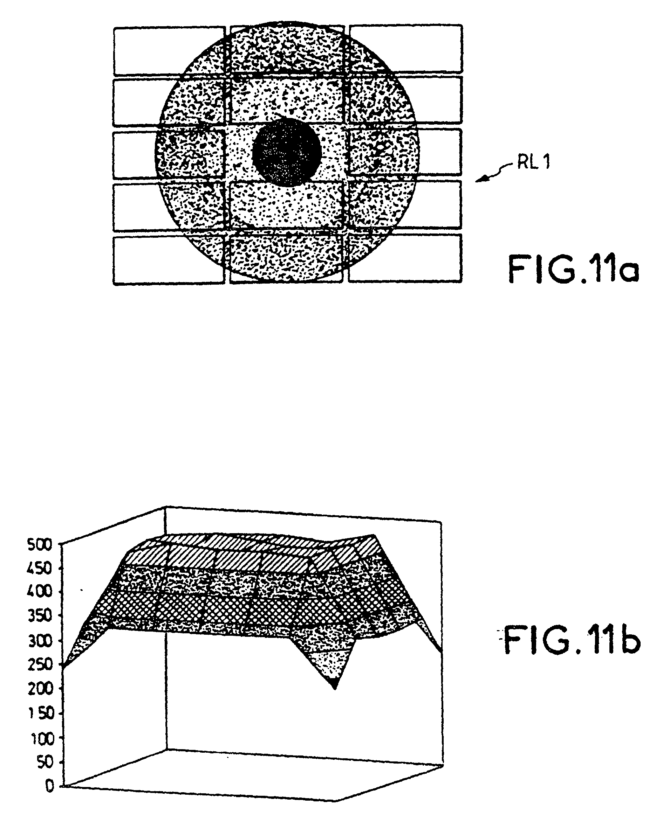

On obtient ainsi un diagramme d'éclairement plus régulier comme cela est illustré par la figure 11b.

Le contraste d'une image fournie par un écran à cristal liquide dépend de l'angle d'incidence du faisceau d'éclairement de l'écran parce que les écrans à cristaux liquides ont un mode de transmission anisotropique. La figure 12 représente, pour un tel écran, des courbes d'iso-contraste en fonction de l'angle d'azimut ψ et de la déclinaison ϕ. Il est clair sur ce diagramme qu'il suffit de tourner l'écran d'environ 4 ou 5 degrés pour régler le contraste à son maximum. Mais il est également clair que la lumière émise par l'intégrateur sous des angles ψ compris entre 180 et 360° contribue à réduire le contraste.

Selon l'invention, on prévoit donc d'arranger les lentilles de l'intégrateur de façon à couvrir de manière privilégiée seulement que la zone correspondant à ψ compris entre 0 et 180°.

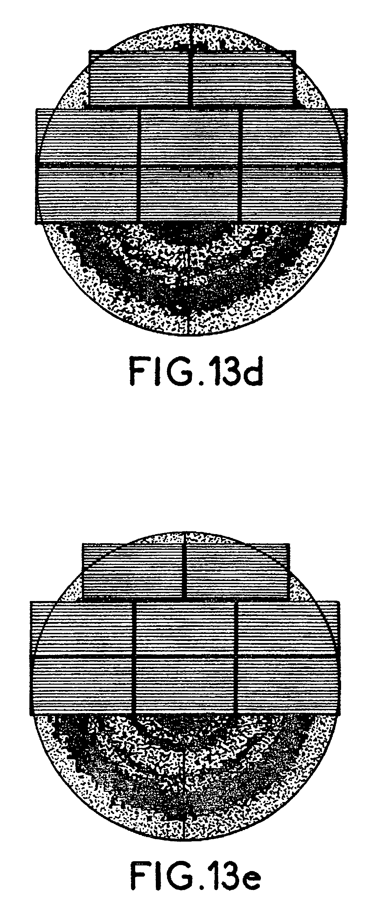

Pour obtenir cela, comme représenté en figures 13a à 13c, les lentilles des réseaux RL1, RL2 sont arrangées de façon à couvrir préférentiellement la moitié supérieure du faisceau retransmis par le réflecteur de la source. La disposition de la figure 13a permet de collecter 91 % de lumière issue du réflecteur mais avec un contraste faible. Les figures 13b et 13c sont des compromis entre la collection de lumière et le contraste. Les figures 13d et 13e permettent d'obtenir encore un meilleur contraste au détriment d'une légère perte d'énergie. En effet, la partie inférieure du faisceau n'est pas utilisée dans ces dispositions, mais ces dispositions peuvent être encore intéressantes.

En se reportant à la figure 14a on va maintenant décrire une application de l'organisation des réseaux de lentilles telle que représentée en figure 13e dans laquelle la quasi totalité des lentilles est concentrée sur la partie supérieure du faisceau. Dans ce cas comme on l'a mentionné, on risque d'avoir une perte d'énergie. Pour pallier cet inconvénient, on prévoit un système de réflecteurs optiques associé à la lampe permettant de diriger toute l'énergie lumineuse sur les réseaux de lentilles.

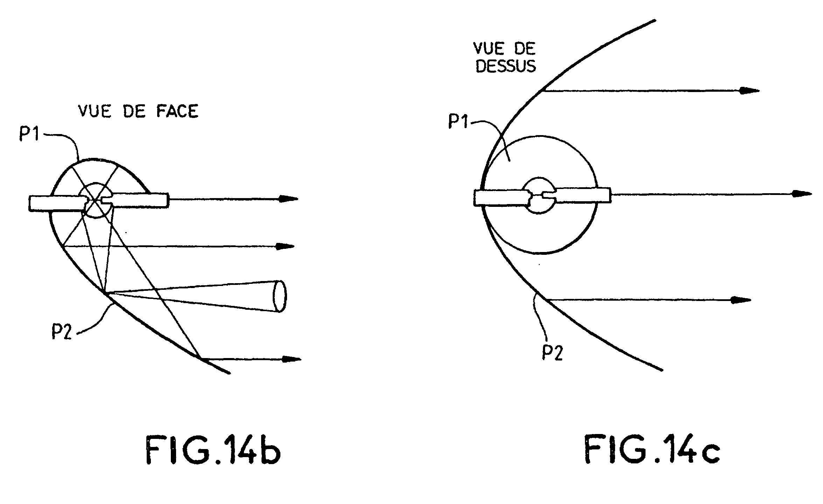

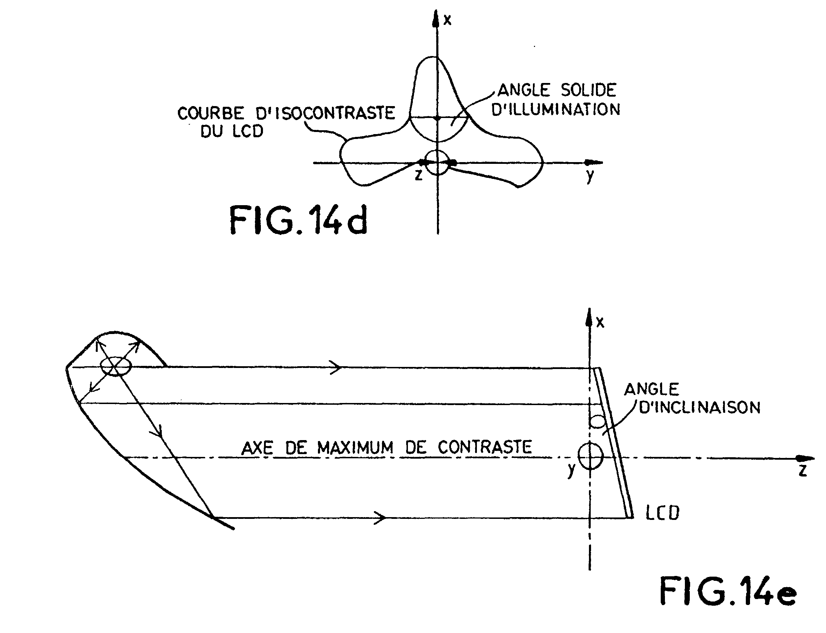

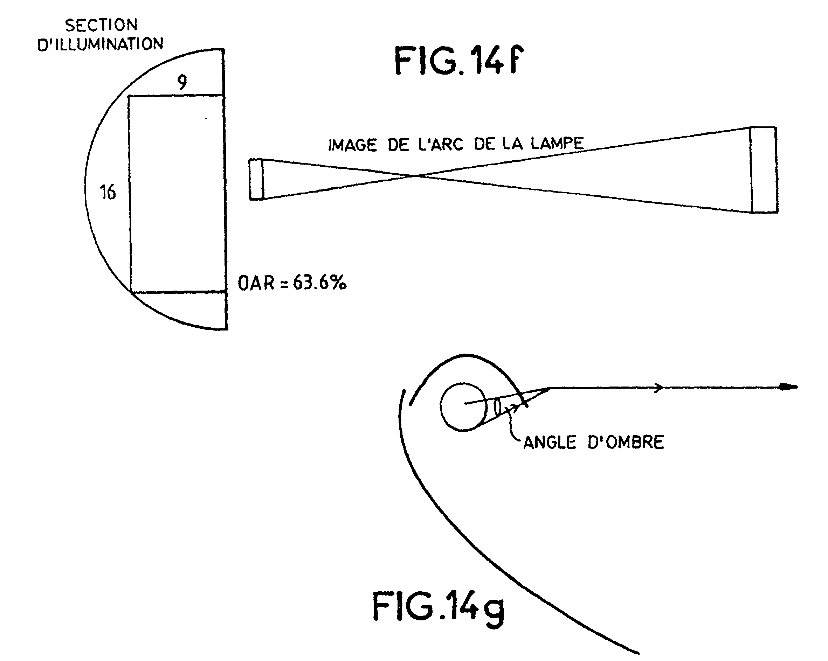

On dispose d'un réflecteur P2 concave elliptique, sphérique ou parabolique avec la lampe S1 disposée au foyer de ce réflecteur. Un autre réflecteur P1 de préférence demi-sphérique, est disposé au-dessus de la lampe et réfléchit la lumière vers le réflecteur P2. Comme représenté en figure 14, comparé au réflecteur de la figure 1, le réflecteur P2 est donc un demi-réflecteur, ou tout au moins la moitié d'un réflecteur est utilisée efficacement. De cette façon, l'écran à cristal liquide est éclairé par un faisceau de lumière incidente dont on a supprimé la partie 180 < ψ < 360.

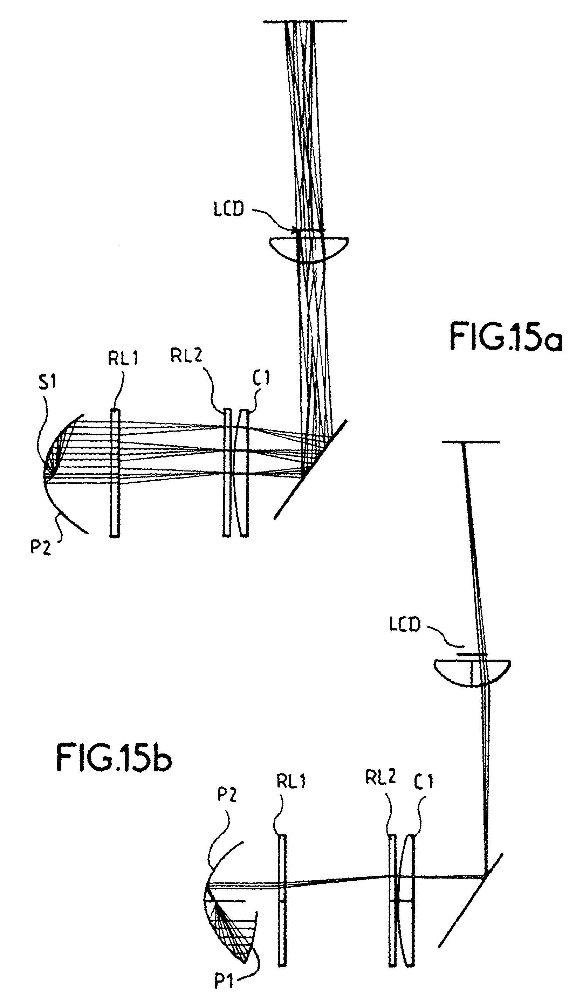

Les figures 15a et 15b représentent une variante du même système optique. D'après les rayons tracés à travers ce système, on voit que les rayons sortent seulement par la partie supérieure du réflecteur. Par contre, ici la moitié inférieure du faisceau n'est pas perdue. Elle est recyclée (figure 15b) par un segment de réflecteur P1 et repasse par la source pour ressortir par la partie supérieure du réflecteur.

Les figures 14a et 15b illustrent donc 2 systèmes qui permettent :
- une grande efficacité de collection (intégrateur) ;
- une grande uniformité d'éclairement de l'écran (intégrateur) ;
- un grand contraste (réflecteurs composites P1 + P2).

Le système proposé est schématisé figures 14a à 14c par différentes vues : vue en 3D, vues dans le plan de face et de dessus. Ce système est formé de deux réflecteurs P1 et P2. L'un (P2) est l'équivalent de la moitié d'un réflecteur parabolique, l'autre (P1) est un réflecteur sphérique. La moitié du réflecteur parabolique P2 fonctionne comme dans un système classique ; à savoir la lampe est au foyer de ce réflecteur, il en est de même pour le réflecteur sphérique P1. Le foyer est au centre de la lampe S1.

Le lobe d'émission de la lampe (en forme de papillon) admet une symétrie de révolution autour de l'axe optique. Si un rayon est émis par la lampe côté réflecteur sphérique P1, celui-ci repasse par la source après une réflexion normale sur le miroir sphérique. Le nouveau rayon se comporte alors comme un nouveau rayon émanant directement de la source et est réfléchi par le réflecteur parabolique P2.

Sur les figures 14d à 14g, on remarque le format de la section d'illumination. Si la cellule cristal liquide est de format 16:9, le taux d'ouverture du rectangle 16:9 inscrit dans un demi-cercle est de 64 % environ, ce qui représente un gain par rapport à la situation classique de 18 % environ.

D'autre part, la source normalement assimilée à un cylindre (pour une lampe claire ou bien pour une lampe légèrement diffusante en début de sa vie) induit cette fois-ci que le cône d'illumination aura une répartition proche de ce cylindre qu'auparavant, plus adaptée au conoscope de contraste d'une cellule à cristal liquide TN. Ce système permet donc d'avoir une illumination plus optimisée sans la présence de l'angle mort constaté dans le cas d'une illumination classique.

Le réflecteur sphérique P1 est en fait une demi-sphère dont le centre est le point focal du réflecteur parabolique P2 (figure 14b). La nature de ce réflecteur est de même type que celle utilisée pour le réflecteur parabolique ; à savoir un miroir froid. Ce réflecteur sphérique image l'arc de lampe au même endroit (objet et image superposés).

Dans le cas d'une lampe à arc court de type Xénon. Le bulbe en quartz est clair, le point chaud de l'émission est assimilé à une sphère (de 2 mm de rayon pour une puissance de 150 W par exemple), il peut être imagé sur le même point chaud (malgré une faible perte de flux absorbé par les électrodes). Dans le cas contraire (image totale et objet superposés) l'image de la source forme avec la nouvelle source un arc plus homogène qu'auparavant au prix d'une nouvelle source plus étendue.

Dans le cas d'une source à arc à halogénure métallique, il est préférable que la lampe soit claire c'est-à-dire non diffusante pour permettre à la lumière réfléchie par le réflecteur sphérique de repasser par l'arc et sortir par le réflecteur parabolique.

Nous savons que contrairement à une source à courant continu (type Xe) où le point chaud de la lampe est plus proche de la cathode, dans le cas d'une source à halogénure métallique à courant alternatif, l'arc est modélisé par un cylindre et occupe la totalité de l'espace entre les deux électrodes identiques. L'image de cette source à travers le réflecteur sphérique doit alors être exactement superposée sur l'objet afin d'éviter toute absorption par les électrodes de la lumière réfléchie.

En fait, il est préférable que le réflecteur parabolique ne soit pas exactement équivalent à un vrai réflecteur parabolique coupé en moitié, mais légèrement plus que la moitié. En effet, le décalage angulaire : angle d'ombre permet d'éviter de perdre une partie de la lumière rayonnée par la lampe (voir figure 14g).

La figure 14a montre le système proposé. Un filtre cholestérique FC composite (de 3 filtres rouge, vert et bleu superposés) est attaqué en incidence normale. Il joue le rôle d'un séparateur de polarisation (donc de polariseur). Le faisceau non polarisé émanant de la source est divisé en deux. Une partie polarisée circulaire droite (ou gauche) est transmise à travers le filtre FC, l'autre partie circulaire gauche (ou droite) est réfléchie et revient vers la source S1. Cette partie est d'abord réfléchie par le réflecteur parabolique P2, passe par la lampe, est réfléchie normalement sur le réflecteur sphérique P1, repasse par la lampe de nouveau et se réfléchit sur le réflecteur parabolique P2. Il en résulte, de ce parcours à trois réflexions, un changement dans l'état de la polarisation. En effet, la polarisation de retour sera alors une circulaire droite si celle qui revient vers la source est circulaire gauche (et vice versa). De cette manière, une bonne partie de la lumière émise par la lampe sera transformée en polarisation utile pour la cellule cristal liquide.

Afin de tenir convenablement compte du déphasage introduit par les réflecteurs, il faut en premier lieu calculer ce déphasage, pour ensuite pouvoir le compenser par une lame à retard positionnée perpendiculairement à l'axe optique, couvrant toute la surface de sortie du réflecteur et positionnée entre le réflecteur et le filtre cholestérique. La valeur du retard doit être appropriée pour convertir le maximum de flux émis par la source dans la bonne polarisation. Le déphasage introduit par le réflecteur parabolique est inhérent pour une surface métallique pure notamment pour des angles d'incidences forts et à des propriétés intrinsèques pour des surfaces à traitement multicouches (type miroir froid).

Enfin, une lame quart d'onde achromatique placée ensuite après ce filtre cholestérique convertira la polarisation circulaire en linéaire, adaptée aux caractéristiques électrooptiques de la valve cristal liquide.

Notons que l'utilisation des filtres cholestériques comme composants séparateurs de polarisation est due aux avantages suivants :
- acceptance angulaire compatible avec des étendues géométriques des lampes à arc à halogénure métallique ;
- les filtres cholestériques peuvent être placés près de la source et supporter des températures importantes ;
- les bandes passantes (de l'ordre de 50 à 80 nm) et le taux de polarisabilité sont acceptables.

Le système de l'invention permet donc d'avoir une illumination optimisée : d'une part, la répartition d'intensité à l'intérieur de l'angle solide d'illumination est plus favorable, et d'autre part, la section d'illumination permet pour une cellule format 16:9 un meilleur taux d'ouverture. L'association d'un composant polarisant type filtre cholestérique permet d'obtenir une source prépolarisée.

On prévoit, après le filtre cholestérique, une lame quart d'onde (achromatique) λ/4 qui convertit la polarisation circulaire en polarisation linéaire qui peut alors être modulée par l'écran à cristal liquide.

## Revendications

1. Dispositif d'éclairement d'une première surface d'écran à cristal liquide comprenant :
- une source lumineuse (S) émettant un faisceau selon une direction et admettant sensiblement une symétrie de révolution autour d'un axe optique du dispositif,
- un premier ensemble de lentilles (RL1) disposées selon une deuxième surface transversalement à la direction du faisceau, chaque lentille focalisant la lumière du faisceau en un point ou une ligne d'une troisième surface,
- un deuxième ensemble de lentilles (RL2) situé selon la troisième surface et imageant chacune une ou plusieurs lentilles du premier ensemble (RL1) sur la première surface à éclairer,
**caractérisé en ce que** les ensembles (RL1, RL2) ne comportent des lentilles éclairées par le faisceau que sensiblement d'un côté d'un plan contenant l'axe optique du dispositif.

2. Dispositif selon la revendication 1 **caractérisé en ce que** ladite source comporte un système de réflexion retransmettant toute l'énergie de cette source de ce côté du plan.

3. Dispositif selon l'une quelconque des revendications 1 à 2 **caractérisé en ce que** la source comprend une lampe (S1) et comporte un premier miroir (P1) réfléchissant la lumière de cette lampe (S1) vers un deuxième miroir concave (P2) qui réfléchit la lumière selon un faisceau dont la section droite est d'un côté par rapport audit plan.

4. Dispositif selon la revendication 3, **caractérisé en ce que** le premier miroir (P1) et le deuxième miroir (P2) sont chacun demi-sphérique, semi-parabolique ou demi-hyperbolique et sont donc dotés d'une base plane.

5. Dispositif selon la revendication 4 **caractérisé en ce que** :
- le deuxième miroir (P2) est quasiment demi-sphérique, semi-parabolique ou demi-hyperbolique
- les foyers des deux miroirs (P1, P2) sont quasiment en coïncidence,
- le premier miroir (P1) et le deuxième miroir (P2) sont situés de part et d'autre d'un plan contenant la base plane du premier miroir (P1),
- la source lumineuse est située quasiment aux foyers des deux miroirs.

6. Dispositif selon la revendication 5 **caractérisé en ce que** le deuxième miroir (P2) comporte un peu plus que la moitié d'un miroir sphérique, parabolique ou hyperbolique, la quasi-totalité de ce miroir étant située d'un même côté dudit plan contenant la base plane du premier miroir (P1).

7. Dispositif selon la revendication 3 **caractérisé en ce qu'**il comporte un filtre de polarisation (FC) par réflexion disposé sur le chemin de la lumière réfléchie par le système de réflexion.

8. Dispositif selon la revendication 7 **caractérisé en ce que** le filtre de polarisation (FC) est un filtre cholestérique.

9. Dispositif selon la revendication 7 **caractérisé en ce qu'**il comporte une lame quart d'onde située entre le filtre de polarisation et la première surface.

10. Dispositif selon l'une quelconque des revendications 7 ou 8, **caractérisé en ce que** la partie de lumière réfléchie vers la source par ledit filtre de polarisation subit un nombre impair de réflexions sur le système de réflecteurs (P1, P2) de telle sorte que la lumière , qui était polarisée dans un premier sens, revient sur le filtre (FC) polarisée dans un sens contraire au premier sens.

11. Dispositif selon l'une quelconque des revendications précédentes **caractérisé en ce que** le premier réseau de lentilles (RL1) comporte un ensemble de lentilles rectangulaires accolées.

12. Dispositif selon l'une quelconque des revendications précédentes **caractérisé en ce qu'**il comprend une optique de focalisation (C1) permettant de superposer sur la première surface les faisceaux transmis par les différentes lentilles du deuxième ensemble de lentilles (RL2).

## Patentansprüche

1. Beleuchtungsvorrichtung einer ersten Fläche eines Flüssigkristallschirms mit:
- einer Lichtquelle (S), die ein Strahlenbündel in einer Richtung emittiert und eine Symmetrie der Drehung um eine optische Achse der Vorrichtung zuläßt,
- einem ersten Satz von Linsen (RL1), die entlang einer zweiten Fläche senkrecht zu der Richtung des Strahls verteilt sind, wobei jede Linse das Licht des Strahlenbündels an einem Punkt oder einer Zeile einer dritten Fläche fokussiert,
- einem zweiten Satz von Linsen (RL2), der entlang der dritten Fläche liegt und jeder eine oder mehrere Linsen des ersten Satzes (RL1) auf der ersten zu beleuchtenden Fläche abbildet,
**dadurch gekennzeichnet, daß**
die Sätze (RL1, RL2) nur durch das Strahlenbündel beleuchtete Linsen enthalten, die im wesentlichen an einer Seite einer Ebene liegen, die die optische Achse der Vorrichtung enthält.

2. Vorrichtung nach Anspruch 1, **dadurch gekennzeichnet, daß** die Quelle ein Reflexionssystem enthält, das die gesamte Energie dieser Quelle von der Seite der Ebene weiterleitet.

3. Vorrichtung nach einem der Ansprüche 1 bis 2, **dadurch gekennzeichnet, daß** die Quelle eine Lampe (S1) und einen ersten Spiegel (P1) enthält, der das Licht der ersten Lampe (S1) zu einem zweiten konkaven Spiegel (P2) reflektiert, der das Licht entlang einem Strahlenbündel reflektiert, dessen Querschnitt auf einer Seite gegenüber der genannten Ebene liegt.

4. Vorrichtung nach Anspruch 3, **dadurch gekennzeichnet, daß** der erste Spiegel (P1) und der zweite Spiegel (P2) jeder halbkugelförmig, halbparabelförmig oder halbhyperbolisch ausgebildet und auf einer Basisebene angeordnet sind.

5. Vorrichtung nach Anspruch 4, **dadurch gekennzeichnet, daß**:
- der zweite Spiegel (P2) etwa halbkugelförmig, halbparabelförmig oder halbhyperbolisch ist,
- die Brennpunkte der beiden Spiegel (P1, P2) im wesentlichen zusammenfallen,
- der erste Spiegel (P1) und der zweite Spiegel (P2) zu beiden Seiten einer Ebene liegen, die die Basisebene des ersten Spiegels (P1) enthält,
- die Lichtquelle im wesentlichen bei den Brennpunkten der beiden Spiegel liegt.

6. Vorrichtung nach Anspruch 5, **dadurch gekennzeichnet, daß** der zweite Spiegel (P2) etwas mehr als die Hälfte eines kugelförmigen, parabelförmigen oder hyperbolischen Spiegels enthält und die Quasi-Gesamtheit dieses Spiegels auf derselben Seite der Ebene liegt, die die Basisebene des ersten Spiegels (P1) enthält.

7. Vorrichtung nach Anspruch 3, **dadurch gekennzeichnet, daß** sie ein Reflexions-Polarisationsfilter (FC) enthält, das auf dem Weg des durch das Reflexionssystem reflektierten Lichtes liegt.

8. Vorrichtung nach Anspruch 7, **dadurch gekennzeichnet, daß** das Polarisationsfilter (FC) ein cholestrisches Filter ist.

9. Vorrichtung nach Anspruch 7, **dadurch gekennzeichnet, daß** sie eine Viertelwellen-Platte enthält, die zwischen dem Polarisationsfilter und der ersten Fläche liegt.

10. Vorrichtung nach einem der Ansprüche 7 oder 8, **dadurch gekennzeichnet, daß** der Teil des Lichtes, der durch das Polarisationsfilter zu der Quelle reflektiert wird, einer ungeraden Zahl von Reflexionen auf dem System der Reflektoren (P1, P2) unterliegt, derart, daß das Licht, das in einer ersten Richtung polarisiert wurde, in einer zu der ersten Richtung entgegengesetzten Richtung zu dem Polarisationsfilter (FC) zurückgelangt.

11. Vorrichtung nach einem der vorangehenden Ansprüche, **dadurch gekennzeichnet, daß** der erste Satz von Linsen (RL1) einen Satz von zusätzliche rechteckförmigen Linsen enthält.

12. Vorrichtung nach einem der vorangehenden Ansprüche, **dadurch gekennzeichnet, daß** sie eine Fokussieroptik (C1) enthält, die es ermöglicht, auf der ersten Fläche die Strahlenbündel zu überlagern, die durch die verschiedenen Linsen des zweiten Satzes von Linsen (RL2) übertragen werden.

## Claims

1. Device for illuminating a first surface of a liquid crystal screen comprising:
- a light source (S) emitting a beam in one direction and being substantially axisymmetric about an optical axis of the device,
- a first set of lenses (RL1) placed along a second surface transverse to the beam direction, each lens focusing the light from the beam onto a point or a line of a third surface,
- a second set of lenses (RL2) located along the third surface, each one imaging one or more lenses of the first set (RL1) onto the first surface to be illuminated,
**characterized in that** the sets (RL1, RL2) only comprise lenses which are illuminated by the beam substantially to one side of a plane containing the optical axis of the device.

2. Device according to Claim 1, **characterized in that** the said source comprises a reflection system retransmitting all the energy from this source to this side of the plane.

3. Device according to either of Claims 1 and 2, **characterized in that** the source comprises a lamp (S1) and comprises a first mirror (P1) reflecting the light from this lamp (S1) to a second concave mirror (P2) which reflects the light along a beam, the cross section of which is to one side with respect to the said plane.

4. Device according to Claim 3, **characterized in that** the first mirror (P1) and the second mirror (P2) are each hemispherical, semi-parabolic or semi-hyperbolic and are therefore endowed with a flat base.

5. Device according to Claim 4, **characterized in that**:
- the second mirror (P2) is virtually hemispherical, semi-parabolic or semi-hyperbolic,
- the foci of the two mirrors (P1, P2) are virtually coincident,
- the first mirror (P1) and the second mirror (P2) are located on either side of a plane containing the flat base of the first mirror (P1),
- the light source is located virtually at the foci of the two mirrors.

6. Device according to Claim 5, **characterized in that** the second mirror (P2) comprises a little more than half a spherical, parabolic or hyperbolic mirror, virtually all of this mirror being located to one side of the said plane containing the flat base of the first mirror (P1).

7. Device according to Claim 3, **characterized in that** it comprises a filter (FC) polarizing by reflection, placed in the path of the light reflected by the reflection system.

8. Device according to Claim 7, **characterized in that** the polarizing filter (FC) is a cholesteric filter.

9. Device according to Claim 7, **characterized in that** it comprises a quarter-wave plate located between the polarizing filter and the first surface.

10. Device according to either of Claims 7 and 8, **characterized in that** that part of the light reflected towards the source by the said polarizing filter undergoes an odd number of reflections on the system of reflectors (P1, P2) such that the light, which was polarized in a first direction, returns to the filter (FC) polarized in a direction opposite to the first direction.

11. Device according to any one of the preceding claims, **characterized in that** the first lens array (RL1) comprises a set of adjoining rectangular lenses.

12. Device according to any one of the preceding claims, **characterized in that** it comprises a focusing optic (C1) making it possible to superimpose the beams transmitted by the various lenses of the second set of lenses (RL2) onto the first surface.
